# EUROPÄISCHE PATENTSCHRIFT

(11) **EP 3 211 533 B1**
(45) Veröffentlichungstag und Bekanntmachung des Hinweises auf die Patenterteilung: **08.01.2020**
(21) Anmeldenummer: 17157802.4
(22) Anmeldetag: 24.02.2017
(51) Int. Cl.: G06F 11/14, G06F 11/20, G05B 19/042, G06F 11/16, G06F 11/18

(54) **FEHLERTOLERANTE SYSTEMARCHITEKTUR ZUR STEUERUNG EINER PHYSIKALISCHEN ANLAGE, INSBESONDERE EINER MASCHINE ODER EINES KRAFTFAHRZEUGS**
FAULT-TOLERANT SYSTEM ARCHITECTURE FOR CONTROLLING A PHYSICAL INSTALLATION, PARTICULARLY OF A MACHINE OR OF A MOTOR VEHICLE
ARCHITECTURE DE SYSTÈME TOLÉRANT AUX PANNES DESTINÉE À COMMANDER UNE INSTALLATION PHYSIQUE, EN PARTICULIER UNE MACHINE OU UN VÉHICULE AUTOMOBILE

(30) Priorität: 26.02.2016 AT 501422016
(43) Veröffentlichungstag der Anmeldung: 30.08.2017
(73) Patentinhaber: TTTech Auto AG, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- WO-A1-2013/138833
- WO-A1-2014/205467
- US-A1- 2013 332 926
- OBERMAISSER R ET AL: "Architectures for mixed-criticality systems based on networked multi-core chips", PROCEEDINGS OF THE 2014 IEEE EMERGING TECHNOLOGY AND FACTORY AUTOMATION (ETFA), IEEE, 16. September 2014 (2014-09-16), Seiten 1-10, XP032718737, DOI: 10.1109/ETFA.2014.7005228 [gefunden am 2015-01-08]
- L M Pinho: "An architecture for reliable distributed computer-controlled systems", ARCHITECTURE AND DESIGN OF DISTRIBUTED EMBEDDED SYSTEMS. IFIP WG10.3/WG10.4/WG10.5 INTERNATIONAL WORKSHOP ON DISTRIBUTED AND PARALLEL EMBEDDED SYSTEMS (DIPES 2000) KLUWER ACADEMIC PUBLISHERS NORWELL, MA, USA, 1. Januar 2001 (2001-01-01), Seiten 43-52, XP055064701, DOI: 10.1007/978-0-387-35409-5_5 Gefunden im Internet: URL:http://www.cister.isep.ipp.pt/activiti es/REFLECT/article1.pdf [gefunden am 2013-05-30]

## Beschreibung

Die Erfindung betrifft ein fehlertolerantes verteiltes Echtzeitcomputersystem zur Steuerung einer physikalischen Anlage, insbesondere einer Maschine oder eines Kraftfahrzeugs, das folgende *Komponenten* umfasst:
- Knotenrechner,
- Verteilereinheiten,
- intelligente Sensoren sowie
- intelligente Aktuatoren,
wobei diese Komponenten Zugriff auf eine globale Zeit bekannter Präzision haben, und wobei die Knotenrechner und intelligenten Sensoren und die intelligenten Aktuatoren über die Verteilereinheiten periodische zeitgesteuerte Nachrichten und ereignisgesteuerte Nachrichten austauschen.

Verteilte Computersysteme sind z.B. beschrieben in WO 2013/138833 A1; OBERMAISSER R ET AL: "Architectures for mixed-criticality systems based on networked multi-core chips", PROCEEDINGS OF THE 2014 IEEE EMERGING TECHNOLOGY AND FACTORY AUTOMATION (ETFA), IEEE, 16. September 2014; US 2013/332926 A1; WO 2014/205467 A1 sowie in L M Pinho: "An architecture for reliable distributed computer-controlled systems", ARCHITECTURE AND DESIGN OF DISTRIBUTED EMBEDDED SYSTEMS. IFIP WG10.3/WG10.4/WG10.5 INTERNATIONAL WORKSHOP ON DISTRIBUTED AND PARALLEL EMBEDDED SYSTEMS (DIPES 2000) KLUWER ACADEMIC PUBLISHERS NORWELL, MA, USA, 1. Jänner 2001 (2001-01-01), Seiten 43 - 52.

Die Erfindung liegt im Bereich der Computertechnik. Sie betrifft eine fehlertolerante Systemarchitektur zur Steuerung einer physikalischen Anlage, insbesondere einer sicherheitskritischen Maschine, insbesondere eines Kraftfahrzeugs.

Eine fehlertolerante verteilte Hardwarearchitektur umfasst die folgenden *Komponenten*: eine Vielzahl von *Knotenrechnern, Verteilereinheiten* und *intelligenten Sensoren*/*Aktuatoren,* wobei die *Komponenten* Zugriff auf eine globale Zeit bekannter Präzision haben und wobei die Knotenrechner und intelligenten Sensoren/Aktuatoren über die Verteilereinheiten periodische zeitgesteuerte Nachrichten austauschen.

Ein *Knotenrechner* ist ein Computer mit einem oder mehrere Kommunikationskanälen, auf dem ein Echtzeitbetriebssystem die Laufzeitumgebung zur Abarbeitung einer Anwendersoftware bereitstellt.

Eine *Verteilereinheit* ist ein Gerät mit Kommunikationskanälen, das eine empfangene Nachricht an einen oder mehrere Empfänger weiterleitet.

Die funktionelle Zusammenfassung eines physikalischen Sensors mit einem Knotenrechner bezeichnet man als *intelligenten Sensor.* Auf dem Markt werden intelligente Sensoren häufig als kompakte Baueinheiten mit einer Schnittstelle zu einem standardisierten Echtzeitkommunikationssystem angeboten.

Ein *intelligenter Sensor* ist ein Gerät, das zu erfassende physikalische Größen zuerst in ein Bitmuster wandelt. Dieses Bitmuster wird im Rahmen der *Vorverarbeitung* durch den intelligenten Sensor auf Plausibilität überprüft und in eine gängige physikalische Messgröße umgeformt. Anschließend wird diese Messgröße in einer Nachricht an die interessierten Empfänger gesendet.

Die funktionelle Zusammenfassung eines physikalischen Aktuators mit einem Knotenrechner bezeichnet man als *intelligenten Aktuator.* Auf dem Markt werden intelligente Aktuatoren häufig als kompakte Baueinheiten, vorzugsweise mit einer Schnittstelle zu einem standardisierten Echtzeitkommunikationssystem angeboten.

Ein *intelligenter Aktuator* ist ein Gerät, das einen in einer Nachricht empfangenen digitalen Sollwert zum vorgegebenen Zeitpunkt in eine physikalische Größe wandelt und an den Prozess ausgibt und damit den physikalischen Prozess in einer physikalischen Anlage oder Maschine beeinflusst.

Ein intelligenter Sensor/Aktuator besteht aus einem *Wandler* (transducer), einem, vorzugsweise *integrierten, Knotenrechner* mit Anwendersoftware und einem *Kommunikations-Controller.*

Ein *Kommunikationssystem ist zeitgesteuert,* wenn der Zeitpunkt des Beginns des Sendens einer Nachricht von einem Knotenrechner oder einer Verteilereinheit vom Fortscheiten der globalen Zeit bestimmt wird. Die periodisch wiederkehrenden Zeitpunkte, zu denen eine Nachricht gesendet werden muss, sind in einem zeitgesteuerten Kommunikationssystem in Form eines *Zeitplans a priori* vorzugeben.

Das Anwendersoftwaresystem besteht aus einer Menge von nicht gerätefixierten Echtzeitsoftwarekomponenten (EZSWK) und der gerätefixierten Software in den Sensoren/Aktuatoren, die mittels zeitgesteuerter Nachrichten entsprechend einem vorgegebenen Datenflussdiagramm Daten austauschen.

Unter einer *Echtzeitsoftwarekomponente* (EZSWK) wird ein Bestandteil eines umfangreichen *echtzeitfähigen Anwendersoftwaresystems* verstanden, der *unter der Voraussetzung einer geeigneten Laufzeitumgebung* innerhalb eines vorgegebenen Echtzeitintervalls aus den bereitgestellten Eingabedaten und einem *inneren Zustand* der EZSWK die *intendierten Ausgabedaten* und einen *neuen inneren Zustand* der EZSWK errechnet.

Als *Anwendersoftware* wird die Summe der *Echtzeitsoftwarekomponenten* (EZSWK) eines verteilten Echtzeitcomputersystems bezeichnet.

Die Hardwarearchitektur beschreibt die Hardware-Komponenten sowie die physischen Datenverbindungen zwischen den Hardware-Komponenten.

Durch das Konzept der *Time-Triggered Virtual Machine (TTVM)* kann die Anwendersoftware eines verteilten Echtzeitcomputersystems von der Hardwarearchitektur weitgehend getrennt werden. Der wesentliche bleibende Zusammenhang zwischen einer EZSWK und dem Knotenrechner, auf dem die EZSWK ausgeführt wird, besteht in der Festlegung der Länge eines *Service Intervalls (SI)*, das vom Betriebssystem bereit gestellt werden muss, um die EZSWK auf dem gegebenen Knotenrechner rechtzeitig auszuführen zu können. Die Einführung von TTVMs schafft präzise definierte Schnittstellen zwischen der *Anwendersoftware* und der Hardware im Wertebereich und im Zeitbereich.

Es ist eine Aufgabe der Erfindung, eine Lösung dafür anzugeben, wie im Fehlerfall ein eingangs beschriebenes Echtzeitcomputersystem schnell rekonfiguriert werden kann, und/oder dass neue Anforderungen und Funktionen im laufenden Betrieb integriert werden können.

Diese Aufgabe wird mit einem Echtzeitcomputersystem gemäß unabhängigem Anspruch 1 dadurch gelöst, dass erfindungsgemäß Funktionen, insbesondere alle Funktionen einer Anwendersoftware in Echtzeitsoftwarekomponenten - EZWSK - enthalten sind, und der periodische zeitgesteuerte Datentransfer zwischen den EZSWK durch ein *zeitgesteuertes Datenflussdiagramm* vorgegeben ist, und wobei in *aktiven lokalen Allokationsplänen* für jede EZSWK
- die *Zuordnung der EZSWK zu einer TTVM* eines Knotenrechners
- die folgenden *Parameter der TTVM*
   ∘ Beginnzeitpunkt und Endzeitpunkt des SI
   ∘ Speicherbereiche für Berechnungen der EZSWK
   ∘ ablauffähiger Code der EZSWK
   ∘ die *Zeitpläne* für die zeitgesteuerte Kommunikation dieser EZSWK
   vorgegeben sind, und wobei in *aktiven lokalen Allokationsplänen* für jede Verteilereinheit die *Zeitpläne* für die zeitgesteuerte Kommunikation in dieser Verteilereinheit enthalten sind, und wobei ein globaler Allokationsplan aus der Summe der *aufeinander abgestimmten* lokalen Allokationspläne aller EZSWK und aller Verteilereinheiten der Anwendersoftware besteht,
   und wobei eine Monitorkomponente periodisch eine Kopie von Nachrichten der Knotenrechner erhält, um den aktuellen Betriebszustand der Knotenrechner festzustellen,
   und wobei nach dem permanenten Ausfall einer oder mehrerer EZSWK die Monitorkomponente einen *passiven globalen Allokationsplan* aktiviert, der die Allokation der EZSWK und deren Datenversorgung auf neu installierten TTVMs auf den weiterhin funktionsfähigen Knotenrechner vorgibt,
   und wobei die EZSWK zum vorgesehenen periodischen Wiederanlaufzeitpunkt entsprechend dem ausgewählten *passiven globalen Allokationsplan* auf den neu konfigurierten TTVMs zur Ausführung gelangen, und wobei ein Wiederanlaufzeitpunkt einer EZSWK in einem periodisch wiederkehrenden Ground-State Intervall liegt, wobei das Ground-State Intervall ein Intervall zwischen dem Ende eines SI und dem Beginn eines folgenden Frames ist, und wobei a priori ein periodischer globaler Wiederanlaufpunkt in einem globalen Ground-State Intervall liegt, während welchem Ground-State Intervall alle EZWSK und alle Verteilereinheiten in ihrem Ground-State verharren.

*Es wird somit in der oben beschriebenen Situation der gegenwärtig aktive globale Allokationsplan, der aus* der Summe der *aufeinander abgestimmten* aktiven lokalen Allokationspläne aller EZSWK und aller Verteilereinheiten der Anwendersoftware besteht, durch einen passiven globalen Allokationsplan ersetzt, sodass dieser passive globale Allokationsplan zum aktiven globalen Allokationsplan wird.

Vorteilhafte Ausgestaltungen des erfindungsgemäßen Echtzeitcomputersystem sind im Folgenden:
- der *SI Parameter* eines SI Intervalls in einem Allokationsplan hängt von der Leistungsfähigkeit jenes Knotenrechners, auf dem eine TTVM für eine EZSWK installiert wird, ab, und wo dieser SI Parameter *a priori* vorgegeben wird;
- in jedem *Knotenrechner* und jeder *Verteilereinheit* ist *a priori* ein *aktiver lokaler Allokationsplan* vorhanden, wobei vorzugsweise in jedem *Knotenrechner* und jeder *Verteilereinheit* mindestens ein *passiver lokaler Allokationsplan* gespeichert werden kann oder ist;
- ein neuer passiver, lokaler oder globaler, *Allokationsplan* wird während des Betriebes errechnet und der oder die lokalen Allokationspläne werden in einen Knotenrechner oder eine Verteilereinheit geladen;
- die Monitorkomponente erhält vor Ende jedes *Ground-State-Zyklus* eine Nachricht mit dem Ground State einer EZSWK von der EZSWK;
- die Monitorkomponente sendet nach dem Ausfall einer EZSWK den zuletzt erhaltenen Ground-State dieser EZSWK an die wieder anlaufende EZSWK;
- die Monitorkomponente wählt nach einem permanenten Ausfall eines Knotenrechners einen *passiven, vorzugsweise globalen; Allokationsplan* aus und allokiert nach der Allokation von sicherheitskritischen Echtzeitsoftwarekomponenten auf neue TTVMs die ausgefallenen nicht sicherheitsrelevanten Echtzeitsoftwarekomponenten - NSEZSWK - nach dem *best-effort Prinzip* auf TTVMs, die auf den verbleibenden funktionierenden Knotenrechnern eingerichtet werden können;
- im Falle, dass eine Fehlerhypothese die fail-silent Eigenschaft eines Knotenrechners vorgibt, wird aktive Redundanz durch die gleichzeitige Aktivierung von zwei unabhängigen TTVM mit der gleichen EZSWK realisiert, wobei die Empfänger der Nachrichten fortfahren, sobald eine der zeitgesteuerten Nachrichten von diesen beiden TTVM eingetroffen ist;
- im Falle, dass die Fehlerhypothese die fail-silent Eigenschaft eines Knotenrechners nicht vorgibt, wird aktive Redundanz durch die gleichzeitige Aktivierung von drei unabhängigen TTVM mit der gleichen EZSWK realisiert, wobei die Empfänger der Nachrichten fortfahren, sobald zwei der drei empfangenen zeitgesteuerten Nachrichten bit-gleiche Resultate beinhalten;
- im Falle dass die Fehlerhypothese fail-silent Eigenschaft eines Knotenrechners nicht vorgibt, wird die fail-silent Eigenschaft durch die gleichzeitige Aktivierung von zwei unabhängigen TTVM mit der gleichen SEZSWK realisiert, wobei die Empfänger der Nachrichten warten, bis beide zeitgesteuerten Nachrichten hätten eintreffen sollen und das Ergebnis verwirft, falls die Resultate in beiden eingetroffenen zeitgesteuerten Nachrichten nicht *bit-gleich* sind;
- die Monitorkomponente läuft gleichzeitig auf zwei TTVMs ab, die auf zwei unterschiedlichen *Knotenrechnern* ausgeführt werden, wobei die beiden unabhängig voneinander errechneten Resultate mittels zeitgesteuerter Nachrichten über zeitgesteuerte Kommunikationskanäle an die spezifizierten Empfänger gesendet werden, und wobei ein spezifizierte Empfänger wartet, bis die a priori festgelegten Empfangszeitpunkte der beiden Nachrichten überschritten wurden und, falls beide Nachrichten eingetroffen sind, die in den Nachrichten erhaltenen Resultate vergleicht und die empfangenen Daten verwirft, wenn die beiden Resultate nicht *bit-gleich* sind;
- die Monitorkomponente wird auf einem *self-checking Knotenrechner* ausgeführt;
- intelligente Sensoren, die an zwei Verteilereinheiten angeschlossen sind, senden jeweils zwei Kopien einer zeitgesteuerten Nachricht gleichzeitig über zwei unabhängige Kommunikationskanäle zu den Verteilereinheiten zur weiteren Verteilung, und wobei der endgültige Empfänger dieser Nachricht, sobald er eine korrekte Kopie empfangen hat, die andere Kopie verwirft.;
- in einem Testbetrieb werden neue erweiterte EZSWK parallel zu den bestehenden EZSWK auf Schatten TTVM installiert und mit den laufenden Eingabedaten des Prozesses versorgt, wobei die Ausgabedaten der neuen EZSWK nicht in den bestehenden Prozess geschaltet werden;
- auf einer neuen Hardwaregeneration werden TTVM für die bestehenden EZSWK installiert;
- zumindest ein *Reserve Knotenrechner* ist zur Übernahme der Funktionen eines ausgefallenen Knotenrechners vorhanden;
- die Knotenrechner und Verteilereinheiten sind auf zwei getrennte, insbesondere *räumlich getrennte Baueinheiten* aufgeteilt;
- ein Knotenrechner, der eine drahtlose Verbindung zu externen Rechnern realisiert, enthält eine Security Firewall.

Die vorliegende Erfindung legt eine innovative verteilte Systemarchitektur offen, die die Steuerung einer physikalischen Anlage, im Besonderen eine Maschine oder eines Kraftfahrzeugs, zum Ziel haben.

Die vorliegende Erfindung legt offen, wie eine Monitorkomponente die Erweiterung der Funktionen und die Fehlerbehandlung eines verteilten Echtzeitsystems durch die Rekonfiguration der Echtzeitsoftwarekomponenten auf neue TTVMs realisieren kann.

Die Erfindung wird anhand der folgenden Zeichnung an Hand eines Beispiels näher erörtert. In dieser zeigt
Fig.1 ein Datenflussdiagramm eines beispielhaften Anwendersoftwaresystem,
Fig. 2 die Komponenten einer Hardwarearchitektur bestehend aus Sensoren/ Aktuatoren, Verteilereinheiten und Knotenrechnern, und
Fig. 3 wie die Komponenten der Hardware aus Figur 2 in *Baueinheiten* zusammengefasst werden können.

Die im Rahmen der Figurenbeschreibung erörterten allgemeinen Zusammenhänge gelten dabei im allgemeinen Rahmen der vorliegenden Erfindung und sind nicht auf die konkrete, beispielhafte Beschreibung einer Ausführung der Erfindung wie in den Figuren dargestellt beschränkt.

Das Anwendersoftwaresystem eines Echtzeitcomputersystems besteht aus einer Menge von Echtzeitsoftwarekomponenten (EZSWK) und der Software in den intelligenten Sensoren/Aktuatoren, die untereinander Daten austauschen.

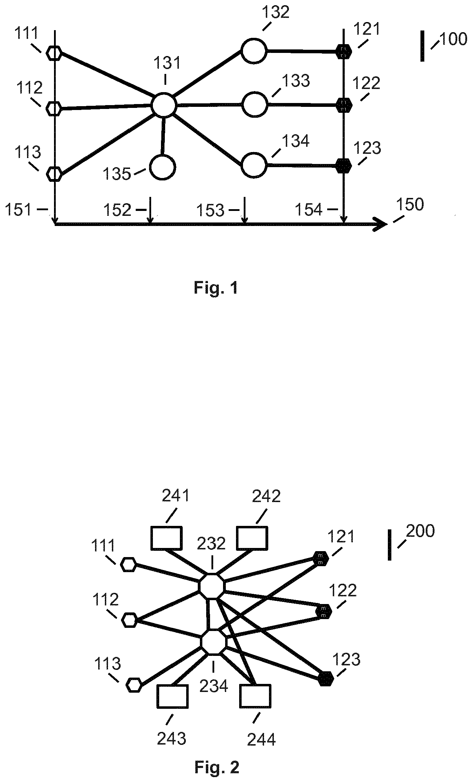

Figur 1 veranschaulicht ein kleines sicherheitsrelevantes Anwendersoftwaresystem. Es umfasst die folgenden *Komponenten*: drei intelligente Sensoren **111**,**11**2 und **113**, fünf EZSWK, bei welchen es sich typischerweise um sicherheitsrelevante EZSWK **131**, **132**, **133**, **134**, **135**, im Folgenden als SEZSWK bezeichnet, und drei intelligente Aktuatoren **121**, **122**, **123.** Das Datenflussdiagramm im oberen Teil der Figur 1 zeigt die Komponenten des Anwendersoftwaresystems und den Datenfluss **100** zwischen den Komponenten. Zusätzlich zu den SEZSWK können weitere *nicht sicherheitsrelevante EZSWK* (NSEZSWK) vorhanden sein, die in dieser Abbildung nicht berücksichtigt sind.

Am Beispiel eines *Fahrerassistenzsystems* kann dieses Anwendersoftwaresystem konkretisiert werden. Der intelligente Sensor **111** ist eine Kamera, der intelligente Sensor **112** ein Radarsystem und der intelligente Sensor **113** ein Lasersystem. Diese drei intelligenten Sensoren beobachten gleichzeitig periodisch die Umgebung eines Fahrzeugs. In den intelligenten Sensoren werden die erfassten Daten vorverarbeitet, bevor sie an die SEZSWK **131** zur Datenfusion übergeben werden. Die SEZSWK **131** fusioniert die empfangenen Daten und baut ein Modell des Umfelds des Fahrzeugs auf. Die SEZSWK **132** realisiert, unter Verwendung dieses Modells von der SEZSWK **131** aufgebauten Modells, eine *Tempomatfunktion* (*cruise control*) und gibt das Ergebnis an die Motorsteuerung **121.** Die SEZSWK **133** realisiert, unter Verwendung dieses Modells von der SEZSWK **131**, die *Spurüberwachung* (*lane control*) und gibt das Ergebnis an das Lenksystem **122.** Die SEZSWK **134** realisiert, unter Verwendung dieses Modells der SEZSWK **131**, die Notbremsfunktion (*emergency braking*) und gibt das Ergebnis an das Bremssystem **123.** Die SEZSWK **135** ist eine Monitorkomponente, die den Ablauf der Berechnungen überwacht und im Fehlerfall den Wiederanlauf einer Komponente veranlasst. Nicht sicherheitsrelevante Komponenten, wie das Multimedia System im Fahrzeug, werden in diesem Beispiel nicht betrachtet.

### Temporales Verhalten

Das Datenflussdiagramm im oberen Teil der Figur 1 beschreibt das *funktionale Verhalten* des Anwendersoftwaresystems, nicht jedoch das *temporale Verhalten.*

Während der Fortgang der physikalischen Prozesse in einer Anlage, der physikalische *Anlagenprozess,* vom Fortschreiten der physikalischen Zeit abhängt, wird die *Ausführungsdauer* von *Computerprozessen,* wie sie etwa in Knotenrechnern ablaufen, von der Taktfrequenz des Computersystems bestimmt.

In einem *verteilten Echtzeitcomputersystem* muss der Fortschritt der physikalischen Prozesse in der Anlage mit den in den Knotenrechnern ablaufenden Computerprozessen periodisch synchronisiert werden.

In einem *zeitgesteuerten verteilten Echtzeitcomputersystem* erfolgt diese Synchronisation zu periodisch wiederkehrenden *a priori* festgelegten Zeitpunkten, zu denen die *Anlagenprozesse* von den intelligenten Sensoren **111**, **112** und **113** beobachtet werden, um sie später mittels der intelligenten Aktuatoren **121**,**122** und **123** zu beeinflussen. Das Zeitintervall zwischen zwei Beobachtungszeitpunkten bezeichnet man als *Frame.*

Die Dynamik der physikalischen Prozesse in der Anlage bestimmt die *Dauer eines Frames.* Unter der Dynamik eines physikalischen Prozesses wird der Maximalwert der Ableitung einer den Prozessverlauf beschreibenden Variablen V nach der Zeit *t* verstanden. In der Entwurfsphase des Anwendersoftwaresystems ist die Dauer *D* eines Frames so zu wählen, dass selbst im Extremfall der höchsten Dynamik des physikalischen Prozesses die Änderung *D.Max* /*dV*/*dt* / einer kontinuierlichen Prozessvariablen innerhalb eines Frames keinen wesentlichen Einfluss auf die gestellte Aufgabe bewirkt.

Wenn im konkreten Beispiel die Framedauer mit 10 msec festgelegt wird, d.h. die Umgebung wird periodisch alle 10 msec beobachtet, so legt ein Fahrzeug in diesem Abtastintervall von 10 ms bei einer Geschwindigkeit von 100 km/h ca. 28 cm zurück, bei einer Geschwindigkeit von 50km/h sind es ca. 14 cm.

### Echtzeittransaktion

Wir bezeichnen die *Ausführung einer EZSWK* als eine *Berechnungsaktion* (*computing action*)*,* die *Ausführung einer Nachrichtenübertragung* von einem Sender zu einem Empfänger als *Kommunikationsaktion* (*communication action*)*,* und die Folge von Berechnungsaktionen und Kommunikationsaktionen zwischen der Beobachtung der Umgebung durch die Sensoren und der Beeinflussung der Umgebung durch die Aktuatoren als *Echtzeittransaktion* (*RT Transaction,* siehe [Kopll, p.24]).

In einem zeitgesteuerten Echtzeitcomputersystem werden die periodischen *Beginn-Zeitpunkte* der Aktionen innerhalb einer Frame-Folge (sowohl der Berechnungsaktionen wie auch der Kommunikationsaktionen) *a priori* festgelegt.

Da die Umgebung nur zum Beginnzeitpunkt eines Frames beobachtet wird, werden die *Berechnungsaktionen* innerhalb eines Frames nicht unterbrochen.

Auf der Zeitachse **150** der Figur 1 sind die Zeitpunkte eingetragen, die den temporalen Ablauf dieser Echtzeitanwendung festlegen. Zum Zeitpunkt **151** wird die Umgebung von den Sensoren **111**, **112** und **113** gleichzeitig beobachtet. Zum Zeitpunkt **152** beginnt die *Berechnungsaktion* der *SEZSWK* **131**, zum Zeitpunkt **153** beginnen die *Berechnungsaktionen* der *SEZSWK* **132**, **133** und **134** und zum Zeitpunkt **154** treffen die Sollwerte bei den intelligenten Aktuatoren **121**, **122** und **123** ein.

Das mit den Zeitpunkten der Verarbeitung annotierte Datenflussdiagramm der Figur 1 stellt ein *zeitgesteuertes Datenflussdiagramm* (*time-triggered data flow diagram*) dar.

In einem umfangreichen zeitgesteuerten Echtzeitcomputersystem kann eine Menge von Frames unterschiedlicher Periodendauer erforderlich sein. Es ist vorteilhaft, wenn jede Framedauer ein harmonisches Vielfaches einer kleinsten Framedauer ist.

### Hardwarearchitektur

Figur 2 zeigt eine Hardwarearchitektur, d.h. ein verteiltes Echtzeitcomputersystem, auf der das Anwendersoftwaresystem der Figur 1 ausgeführt wird. Die intelligenten Sensoren **111**, **112** und **113** und die intelligenten Aktuatoren **121**, **122** und **123** sind *Software*/*Hardware Einheiten* die, wie in Figur 1 gezeigt, am Anfang und am Ende jeder Echtzeittransaktion liegen. Zwischen diesen intelligenten Sensoren **111**, **112** und **113** und Aktuatoren **121**, **122** und **123** befinden sich die Verteilereinheiten **232** und **234**, die Knotenrechner **241**, **242**, **243** und **244**, auf denen die SEZSWK **131**, **132**, **133**, **134** und **135** auszuführen sind, und die Kommunikationskanäle **200.** Vorzugsweise werden auf den physischen Kommunikationskanälen **200** vorwiegend periodische Zustandsnachrichten transportiert. Die Zeitintervalle, während deren keine zeitgesteuerten Nachrichten transportiert werden, können zum Transport von ereignisgesteuerter Nachrichten verwendet werden.

Intelligente Sensoren, die an zwei Verteilereinheiten angeschlossen sind (wie z.B. der Sensor **112**), können jeweils zwei Kopien einer zeitgesteuerten Nachricht gleichzeitig über die beiden unabhängigen Kommunikationskanäle **200** zu den Verteilereinheiten **232** und **234** zur weiteren Verteilung senden. Sobald der endgültige Empfänger eine korrekte Kopie dieser Nachricht empfangen hat, verwirft er die andere Kopie.

### Zustandsnachrichten

Die *Zugriffssemantik* zu den Daten einer *periodischen Zustandsnachricht* entspricht weitgehend der Zugriffssemantik zu Variablen in einer Programmiersprache. Beim Lesen wird der aktuelle Wert der Zustandsnachricht übernommen. Da beim Eintreffen einer neuen Version einer Zustandsnachricht die alte Version überschrieben wird, gibt es bei der Kommunikation mittels Zustandsnachrichten keine Warteschlangen. Eine genaue Beschreibung der Zugriffssemantik von Zustandsnachrichten findet sich in [Kopll, S.91].

### Time-Triggered Virtual Machine (TTVM)

Die zeitrichtige Ausführung einer *Echtzeitsoftwarekomponente (EZSWK)* erfolgt auf einer *virtuellen zeitgesteuerten Maschine (time-triggered virtual machine TTVM),* die vom Betriebssystem eines Knotenrechners *emuliert* wird (siehe auch [FTS15]).

Unter dem Begriff der *Emulation* wird in der Informatik die Nachahmung der Funktion eines Computers durch einen anderen Computer verstanden. Unter dem Begriff der *Virtualisierung* wird die Bildung einer *emulierten Serviceeinheit* durch eine Softwareschicht eines in einer konkreten Hardwareumgebung ablaufenden nativen Betriebssystems verstanden. Mittels der Virtualisierung lassen sich *nicht-physische Computer Ressourcen,* wie *emulierte Hardware, emulierte Betriebssysteme, emulierte Datenspeicher* oder *emulierte Netzwerkressourcen* gestalten. Die Virtualisierung ermöglicht es, abstrakte Computer-Ressourcen mit festgelegten Leistungsmerkmalen ohne Bezugnahme auf eine konkrete physische Laufzeitumgebung zu bilden, etwa ein *emuliertes Betriebssystem* durch ein auf einer konkreten Hardware laufendes *natives Betriebssystem.* Die Virtualisierung hat im Bereich des Cloud Computing eine große wirtschaftliche Bedeutung erlangt.

Eine *Time-Triggered Virtual Machine (TTVM)* ist eine *abstrakte Serviceeinheit,* die von dem in einem Knotenrechner laufenden nativen Betriebssystem *emulierte Computer Ressourcen* während eines *periodischen Echtzeitintervalls (dem Service-Intervall SI)* bereit gestellt bekommt, um die Echtzeit-Softwarekomponente, die der TTVM zugeteilt wurde, im SI zeitgerecht auszuführen. Ein Knotenrechner kann mehrere TTVM enthalten. Die Länge des SI wird durch den *SI Parameter* ausgedrückt.

Allgemein gilt, dass die Beginn-Zeitpunkte und die End-Zeitpunkte der periodischen SIs von TTVMs im Rahmen des Systementwurfs auf der globalen Zeitachse *a priori* spezifiziert werden. Vor dem Beginn-Zeitpunkt eines SI müssen die Eingabedaten eingetroffen sein. Nach dem End-Zeitpunkt eines SI können die Ausgabedaten einem Kommunikationssystem zum weiteren Transport übergeben werden. Während des SI wird der TTVM von dem auf der konkreten Maschine laufenden Betriebssystem der geschützte Zugriff auf die der TTVM zugewiesenen Netzwerkressourcen und Speicherressourcen ermöglicht und es wird der TTVM eine definierte Rechenleistung zur Abarbeitung der in der TTVM laufenden EZSWK derart zugeteilt, dass von der EZSWK die intendierten Ausgabedaten vor dem Ende des SI bereit gestellt werden können.

Die Tatsache, dass der Beginnzeitpunkt des SI dem Betriebssystem eines Knotenrechners *a priori* bekannt ist, ermöglicht es dem Betriebssystem, vor dem Beginnzeitpunkt des SI Maßnahmen, wie z.B. die Sicherung der Daten laufender Prozesse, vorzunehmen, um mit Beginn des SI die volle Rechenleistung des Knotenrechners der vorgesehenen EZSWK zur Verfügung stellen zu können.

Die Länge des SIs einer TTVM muss so gewählt werden, dass die *Hardware des Knotenrechners* in der Lage ist, während des a priori festgelegten SI die zugewiesene EZSWK rechtzeitig abzuschließen.

Die Länge eines SI hängt von der Leistungsanforderung der EZSWK und der Leistungsfähigkeit der zur Verfügung stehenden Hardware ab.

Eine TTVM realisiert eine virtuelle Software/Hardware Schnittstelle zur Ausführung einer spezifizierten Berechnungsaktion.

### Allokationsplan

Die Abbildung der *Anwendersoftware* der Figur 1 auf die Hardwarearchitektur der Figur 2 erfolgt durch einen *Allokationsplan.*

Ein Allokationsplan ist zu einem Zeitpunkt *aktiv,* wenn die im Allokationsplan festgelegte Abbildung der *Anwendersoftware* auf die Hardware zu diesem Zeitpunkt realisiert wird.

Ein Allokationsplan ist zu einem Zeitpunkt *passiv,* wenn die im Allokationsplan festgelegte Abbildung der *Anwendersoftware* auf die Hardware und die erforderlichen Ressourcen in den Knotenrechnern bzw. Verteilereinheiten vorliegen, jedoch zu diesem Zeitpunkt nicht realisiert wird.

Ein *passiver Allokationsplan* kann vor der Inbetriebnahme des Systems erstellt und in die Knotenrechner und Verteilereinheiten geladen werden oder er kann während des laufenden Betriebs errechnet und in die Knotenrechner oder Verteilereinheiten geladen werden.

Es wird zwischen einem *lokalen Allokationsplan (LAP)* und einem *globalen Allokationsplan (GAP)* unterschieden.

Ein lokaler Allokationsplan (LAP) bezieht sich jeweils auf eine bestimmte EZSWK oder eine Verteilereinheit.

Ein LAP für eine EZSWK enthält vorzugsweise die folgenden Informationen:
- Die *Zuordnung der EZSWK zu einer TTVM* eines Knotenrechners
- Die *Parameter der TTVMs* - diese Parameter benötigt das Betriebssystem eines Knotenrechners, um eine TTVM in einem Knotenrechner zu installieren - wie:
   o Beginnzeitpunkt und Endzeitpunkt des SI
   ∘ Speicherbereiche für Berechnungen der EZSWK
   ∘ ablauffähiger Code der EZSWK
   ∘ Die *Zeitpläne* für die zeitgesteuerte Kommunikation dieser EZSWK

Ein LAP für eine Verteilereinheit enthält die *Zeitpläne* für die zeitgesteuerte Kommunikation in dieser Verteilereinheit.

Ein globaler Allokationsplan (GAP) besteht aus der Summe der *aufeinander abgestimmten* lokalen Allokationspläne aller EZSWK und aller Verteilereinheiten der Anwendersoftware.

### Aktive Redundanz

Mit dem beschriebenen Verfahren lässt sich auf der vorgestellten Hardware/Software Architektur *aktive Redundanz* einfach realisieren.

Die konkrete Konfiguration der aktiven Redundanz hängt von der vorgegebenen *Fehlerhypothese* ab (siehe [Kopll, p. 153]).

Wenn die Fehlerhypothese die *fail-silent* Eigenschaft der Knotenrechner vorgibt, dann kann aktive Redundanz durch die gleichzeitige Aktivierung von zwei unabhängigen TTVM mit der gleichen SEZSWK auf unterschiedlichen Knotenrechnern realisiert werden, wobei die Empfänger der Nachrichten fortfahren, sobald eine der zeitgesteuerten Nachrichten von diesen beiden TTVM eingetroffen ist.

Wenn die Fehlerhypothese die *fail-silent* Eigenschaft eines Knotenrechners nicht vorgibt, kann aktive Redundanz durch die gleichzeitige Aktivierung von drei unabhängigen TTVM mit der gleichen SEZSWK auf drei unterschiedlichen Knotenrechnern realisiert werden (*Triple Modulare Redundanz,* TMR siehe Kop11, p.155), wobei die Empfänger der Nachrichten fortfahren, sobald zwei der drei empfangenen zeitgesteuerten Nachrichten *bit-gleiche Resultate* beinhalten.

Wenn die Fehlerhypothese die fail-silent Eigenschaft eines Knotenrechners nicht vorgibt, kann ein fail-silent Verhalten einer SEZSWK durch die gleichzeitige Aktivierung von zwei unabhängigen TTVM mit der gleichen SEZSWK auf zwei unterschiedlichen Knotenrechnern realisiert werden, wobei ein Empfänger der Nachrichten wartet, bis beide zeitgesteuerten Nachrichten hätten eintreffen sollen und das Ergebnis verwirft, wenn die Resultate der beiden eingetroffenen zeitgesteuerten Nachrichten nicht *bit-gleich* sind.

### Monitorkomponente

Es ist die Aufgabe der SEZSWK **135**, der *Monitorkomponente,*
- einen Ausfall einer Hardware-Komponente zu erkennen und eine Fehlerbehandlung zu aktivieren, z.B. indem ein Befehl erteilt wird, den *gegenwärtig aktiven GAP* durch eine *gegenwärtig passiven GAP* zu ersetzen, und/oder
- mit einem Befehl die Rekonfiguration eines Systems, insbesondere des Computersystems, zu veranlassen, um neue Funktionen zu realisieren, die in einem neu erstellten GAP mit erweiterten oder zusätzlichen EZSWK enthalten sind.

Die *Monitorkomponente* **135** erkennt den Ausfall einer SEZSWK am Ausfall der an sie gerichteten periodische *Ground-State Nachricht* einer SEZSWK.

Es ist sinnvoll, zwischen einer *transienten* und einer *permanenten* Ausfallursache einer Komponente zu unterscheiden. Die Erfahrung zeigt, dass der wesentlich größere Teil der Ausfälle von Computersystemen auf transiente Ausfallursachen zurückgeführt werden kann.

Bei einer *transienten Ausfallursache* wird der *innere Zustand* einer Komponente korrumpiert, die Hardware der Komponente bleibt jedoch unversehrt. In diesem Fall kann der Ausfall behoben werden, in dem die Komponente mit einem richtigen Zustand versorgt und erneut in das System integriert wird (*Wiederanlauf*).

### Ground State

Eine Voraussetzung für einen schnellen Wiederanlauf ist die Planung von periodischen *Wiederanlaufpunkten* in der Entwurfsphase. Es ist vorteilhaft, wenn die periodischen Wiederanlaufpunkte unmittelbar vor dem Beginn eines neuen Frames eingeplant werden, da zu diesem Zeitpunkt der *innere Zustand* einen minimalen Umfang hat. Wir bezeichnen das (kurze) Intervall zwischen dem Ende des Service Intervalls eines Frames und dem Beginn des folgenden Frames als *Ground-State Intervall,* in dem der *Ground State* einer SEZSWK definiert ist (siehe [Kopll, p.86]). Der *Ground-State* ist jene Datenstruktur, die von einem Frame auf den folgenden Frame übergeben werden muss, und die beim *Wiederanlauf* nach einem Fehler wieder hergestellt werden muss. Das Zeitintervall zwischen zwei Wiederanlaufpunkte bezeichnet man als *Ground-State Zyklus.*

Es ist vorteilhaft, wenn *a priori* ein periodischer *globaler Wiederanlaufpunkt* in einem *globalen Ground-State Intervall* vorgegeben ist, während dem alle EZWSK und alle Verteilereinheiten in ihrem *Ground-State* verharren. An diesem globalen Wiederanlaufpunkt kann das gesamte System durch die Aktivierung eines neuen erweiterten GAPs rekonfiguriert werden.

Vorzugsweise wird der *Ground-State* einer SEZSWK im *Ground-State Intervall* in Form einer *Ground-State Nachricht* periodisch an die Monitorkomponente **135** der Figur 1 gesendet. Im Fall des Wiederanlaufs einer SEZSWK sendet die Monitorkomponente **135** den zuletzt empfangenen *Ground-State* vor dem nächsten Wiederanlaufzeitpunkt, der im *Ground-State Intervall* liegen muss, an die wiederanlaufende SEZSWK.

### Rekonfiguration

Im Falle einer *permanenten Ausfallursache* bleibt die betroffene Hardware-Komponente permanent defekt. In diesem Fall muss die Software/Hardware Allokation von einer Monitorkomponente rekonfiguriert werden. Eine Rekonfiguration stellt auf einem anderen funktionstüchtigen Knotenrechner eine neue TTVM mit entsprechender Leistung zur Ausführung der durch den Ausfall betroffenen EZSWK bereit.

Die Rekonfiguration erfordert, dass durch eine Monitorkomponente der Ausfall einer Hardware-Komponente erkannt wird und ein *passiver globaler Allokationsplan,* der den erkannten Ausfall berücksichtigt, aktiviert wird. Dieser passive globale Allokationsplan ersetzt bei seiner Aktivierung den bisher aktiven globalen Allokationsplan.

In einem sicherheitskritischen System muss die Rekonfiguration sehr schnell ablaufen. Vorzugsweise wird deshalb festgelegt, dass passive Allokationspläne zur Fehlerbehandlung bereits in der Entwurfsphase erstellt werden und die notwendigen Datenstrukturen in den betroffenen Hardware-Komponenten *a priori* zum Abruf bereit liegen.

Als Beispiel zeigt Tabelle 1 sechs passive globale Allokationspläne (konkret gesprochen lediglich jenen Teil der Allokationspläne, welcher die Zuordnung der SEZSWK zu den Hardware-Komponenten betrifft) für den Fall, dass eine der Hardware-Komponenten der Figur 2 ausgefallen ist. Die Eintragungen in Tabelle 1 geben an, auf welchen Knotenrechner der Figur 2 (die im Kopf der Tabelle 1 angeführt sind) im Fehlerfall (erste Eintragung in jeder Zeile der Tabelle 1) die SEZSWK allokiert sind. PAP steht für "passiver Allokationsplan".

**Tabelle 1: Aktive und passive globale Allokationspläne**

| **Hardware Komponente** | **232** | **234** | **241** | **242** | **243** | **244** |
|---|---|---|---|---|---|---|
| *aktiver Allokationsplan* (alles funktioniert) | ok | ok | SEZSWK | SEZSWK | SEZSWK | SEZSWK |
| | | | 131 | 132 | 134 | 135 |
| | | | | 133 | 135 | |
| PAP-1 (HW Komponente 232 ausgefallen) | | | | | SEZSWK | SEZSWK |
| | kaputt | ok | Kaputt | kaputt | 131 | 132 |
| | | | | | 135 | 133 |
| | | | | | | 134 |
| PAP-2 (HW Komponente 234 ausgefallen) | | | SEZSWK | SEZSWK | | |
| | ok | kaputt | 131 | 132 | kaputt | kaputt |
| | | | 135 | 133 | | |
| | | | | 134 | | |
| PAP-3 (HW Komponente 241 ausgefallen) | ok | ok | Kaputt | SEZSWK | SEZSWK | SEZSWK |
| | | | | 131 | 134 | 132 |
| | | | | | 135 | 133 |
| PAP-4 (HW Komponente 242 ausgefallen) | ok | ok | SEZSWK | kaputt | SEZSWK | SEZSWK |
| | | | 131 | | 132 | 134 |
| | | | | | 133 | 135 |
| PAP-5 (HW Komponente 243 ausgefallen) | ok | ok | SEZSWK | SEZSWK | kaputt | SEZSWK |
| | | | 131 | 134 | | 132 |
| | | | | 135 | | 133 |
| PAP-6 (HW Komponente 244 ausgefallen) | ok | ok | SEZSWK | SEZSWK | SEZSWK | kaputt |
| | | | 131 | 132 | 134 | |
| | | | | 133 | 135 | |

Sobald die Monitorkomponente einen permanenten Ausfall feststellt, sendet sie an die *Technology Independent Control Interfaces* (siehe [Kopll, p.94]) der betroffenen Knotenrechner und Verteilereinheiten Rekonfigurationsnachrichten mit der Identifikation des ausgewählten lokalen passiven Allokationsplans. Nach Abschluss der Rekonfiguration durch die Komponenten ist der System Wiederanlauf wie nach einem transienten Fehler durchzuführen.

Die Allokation nach dem Ausfall eines Knotenrechners wird vereinfacht, wenn in der Hardwarestruktur ein *Reserve-Knotenrechner* zur Übernahme der Funktionen eines ausgefallenen Knotenrechners vorgesehen wird.

Nach der Allokation der sicherheitskritischen Echtzeitsoftwarekomponenten auf neue TTVMs können die ausgefallenen nicht sicherheitsrelevanten Echtzeitsoftwarekomponenten (NSEZSWK) nach dem *best-effort Prinzip* auf TTVMs, die auf den verbleibenden funktionierenden Knotenrechnern eingerichtet werden können, allokiert werden. Die Allokationspläne für NSEZSWK können auch on-line unter Berücksichtigung des aktuellen Systemzustands berechnet werden.

Ein Fehler in der Monitorkomponente ist sicherheitskritisch, da durch einen solchen Fehler eine funktionsfähige Allokation gestört werden kann.

Vorzugsweise wird daher im fehlerfreien Fall die Monitorkomponente **135** gleichzeitig auf zwei TTVMs ausgeführt, die auf zwei unterschiedlichen *Knotenrechnern* installiert sind, um einen Hardwarefehler in einem Knotenrechner erkennen zu können. Die beiden unabhängig voneinander errechneten Resultate werden mittels zeitgesteuerter Nachrichten über zeitgesteuerte Kommunikationskanäle an die spezifizierten Empfänger gesendet. Ein spezifizierter Empfänger wartet, bis die festgelegten Empfangszeitpunkte der beiden Nachrichten überschritten wurden. Sobald beide Nachrichten eingetroffen sind, vergleicht der Empfänger die in den Nachrichten erhaltenen Resultate. Er verwirft beide Nachrichten wenn die beiden Resultate nicht *bit-gleich* sind.

Vorzugsweise kann die Monitorkomponente **135** auch auf einem *self-checking Knotenrechner,* der nur *fail-silent Ausfälle* aufweist, ausgeführt werden.

### Getrennte Baueinheiten

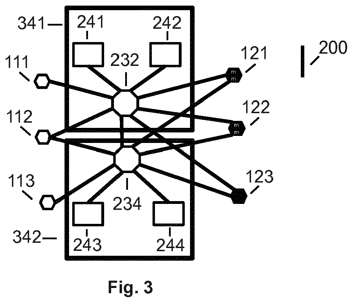

Figur 3 zeigt die Aufteilung der Hardwarekomponenten der Figur 2 auf zwei getrennte Baueinheiten **341** und **342.** Jede der beiden Baueinheiten hat beispielsweise eine Verarbeitungskapazität, die ausreicht, um die sicherheitskritischen Funktionen entsprechend den passiven Allokationsplänen PAP-1 und PAP-2 der Tabelle 1 auszuführen. Die Aufteilung der Hardwarekonfiguration der Figur 2 auf zwei Baueinheiten, die an räumlich getrennten Orten installiert sind, stellt sicher, dass auch nach einer mechanischen Beschädigung einer Baueinheit, z.B. bei einem Unfall, die funktionsfähige zweite Baueinheit die sicherheitsrelevanten Funktionen weiter ausführen kann.

### Security

In einigen Echtzeitanwendungen wird verlangt, dass einer der Knotenrechner, z.B. der Knotenrechner **244** in Figur 2, eine drahtlose Verbindung zu externen Rechnern unterstützt. Entsprechend kann festgelegt werden, dass in diesem Knotenrechner eine Security Firewall installiert wird. Eine *Security Firewall* ist eine SEZSWK eines verteilten Computersystems, die überprüft, ob eintreffende und ausgehende Nachrichten eines Systems *spezifizierte Security Bedingungen (Security Assertions)* erfüllen. Die *Security Assertions* können in der Form einer speziellen *Security Markup Language,* z.B. SAML [Cam15] formuliert werden.

### On-Line Evolution von Systemen

In vielen technischen Anwendungen, z.B. im *Smart Grid* zur Energieversorgung, muss der Betrieb 24 Stunden pro Tag und 7 Tage pro Woche aufrechterhalten werden. In diesen Anwendungen ist es nicht möglich, das steuernde Computersystem abzuschalten, um eine neue Version der Software zu installieren.

Die vorliegende Erfindung ermöglicht unter anderem ein großes verteiltes Computersystem *on-line,* d.h. während des Betriebes, zu erweitern. Zu diesem Zweck muss eine neue Version eines globalen Allokationsplans (GAP) mit erweiterten oder neuen EZSWK erstellt werden.

In einer ersten Phase, der Phase des Testbetriebs, werden die neuen erweiterten EZSWK auf *Schatten TTVMs (shadow TTVMs)* installiert. Eine *Schatten TTVM* ist eine TTVM, die auf einem bestehenden oder neuen Knotenrechner zur Ausführung einer EZSWK läuft und die mit den Eingabedaten des laufenden Prozesses versorgt wird, deren Ausgabedaten jedoch nicht in den laufenden Prozess, sondern auf eine Testkonsole geleitet werden. In der Testphase können auch zusätzliche intelligente Sensoren zur Versorgung der auf den Schatten TTVM exekutierenden EZSWK eingerichtet werden. Sobald die neuen EZSWK ausreichend getestet sind, wird die Phase des Testbetriebs abgeschlossen.

In der zweiten Phase, der Phase der Umschaltung, wird beim nächsten *globalen Wiederanlaufpunkt* der bestehende GAP durch die neue Version des GAP ersetzt und es werden die errechneten Ausgabedaten der neuen Version des GAP an den laufenden Prozess geleitet.

Das Problem der *Hardware Obsolescence* kann mit der vorgeschlagenen Architektur wie folgt gelöst werden: Zuerst werden auf einer neuen Hardwaregeneration *Schatten TTVM* für die bestehenden EZSWK eingerichtet und getestet. Sobald die Tests erfolgreich abgeschlossen sind, wird beim nächsten *globalen* Wiederanlaufpunkt der neue GAP aktiviert, wobei der neue GAP die alten Hardwarekomponenten abschaltet und die Ergebnisse der auf der neuen Hardwaregeneration laufenden EZSWK an den Prozess leitet.

### Literatur:

[FTS 15] Verfahren zur Realisierung und zum Ausführen einer umfangreichen Echtzeitcomputeranwendung. Patent eingereicht von der Fa. FTS Computertechnik beim Öst. Patentamt am 2. 12. 2015.
[Kop11] Kopetz, H. Real-Time Systems - Design Principles for Distributed Embedded Applications. Springer Verlag 2011.
[Cam15] Campbell, B. et al. Security Markup Language (SAML) 2.0 Profile. Internet Engineering Task Force. RFC7522, May 2015. Accessed on Feb. 15, 2017 at URL: https://tools.ietf.org/html/rfc7522.html

## Patentansprüche

1. Fehlertolerantes verteiltes Echtzeitcomputersystem zur Steuerung einer physikalischen Anlage, insbesondere einer Maschine oder eines Kraftfahrzeugs, das folgende *Komponenten* umfasst:
- Knotenrechner (241, 242, 243, 244),
- Verteilereinheiten (232, 234),
- intelligente Sensoren (111, 112, 113) sowie
- intelligente Aktuatoren (121, 122, 123), wobei diese Komponenten Zugriff auf eine globale Zeit bekannter Präzision haben, und wobei die Knotenrechner und intelligenten Sensoren und die intelligenten Aktuatoren über die Verteilereinheiten periodische zeitgesteuerte Nachrichten und ereignisgesteuerte Nachrichten austauschen, wobei
Funktionen, insbesondere alle Funktionen der Anwendersoftware in Echtzeitsoftwarekomponenten - EZSWK - enthalten sind, und der periodische zeitgesteuerte Datentransfer zwischen den EZSWK vorgegeben ist,
und wobei in *aktiven lokalen Allokationsplänen* für jede EZSWK
- die *Zuordnung der EZSWK zu einer Time-Triggered Virtual Machine* - *TTVM* - eines Knotenrechners
- die folgenden *Parameter der TTVM*
∘ Beginnzeitpunkt und Endzeitpunkt eines Service Intervalls - SI -
∘ Speicherbereiche für Berechnungen der EZSWK
∘ ablauffähiger Code der EZSWK
∘ die *Zeitpläne* für eine zeitgesteuerte Kommunikation dieser EZSWK
vorgegeben sind, und wobei in *aktiven lokalen Allokationsplänen* für jede Verteilereinheit die *Zeitpläne* für die zeitgesteuerte Kommunikation in dieser Verteilereinheit enthalten sind, und wobei ein globaler Allokationsplan aus der Summe der *aufeinander abgestimmten* lokalen Allokationspläne aller EZSWK und aller Verteilereinheiten der Anwendersoftware besteht,
und wobei eine Monitorkomponente periodisch eine Kopie von Nachrichten der Knotenrechner erhält, um einen aktuellen Betriebszustand der Knotenrechner festzustellen,
**dadurch gekennzeichnet, dass**
nach dem permanenten Ausfall einer oder mehrerer EZSWK die Monitorkomponente einen *passiven globalen Allokationsplan* aktiviert, der die Allokation der EZSWK und deren Datenversorgung auf neu installierten TTVMs auf den weiterhin funktionsfähigen Knotenrechner vorgibt,
und wobei die EZSWK zu einem vorgesehenen periodischen Wiederanlaufzeitpunkt entsprechend dem ausgewählten *passiven globalen Allokationsplan* auf den neu konfigurierten TTVMs zur Ausführung gelangen, und wobei ein Wiederanlaufzeitpunkt einer EZSWK in einem periodisch wiederkehrenden *Ground-State Intervall* liegt, wobei das Ground-State Intervall ein Intervall zwischen dem Ende eines SI und dem Beginn eines folgenden Frames ist, und wobei *a priori* ein periodischer *globaler Wiederanlaufpunkt* in einem *globalen Ground-State Intervall* liegt, während welchem Ground-State Intervall alle EZWSK und alle Verteilereinheiten in ihrem *Ground-State* verharren.

2. Echtzeitcomputersystem nach Anspruch 1, **dadurch gekennzeichnet, dass** der *SI Parameter* eines SI Intervalls in einem Allokationsplan von der Leistungsfähigkeit jenes Knotenrechners, auf dem eine TTVM für eine EZSWK installiert wird, abhängt, und wo dieser SI Parameter *a priori* vorgegeben wird.

3. Echtzeitcomputersystem nach Anspruch 1 oder 2, **dadurch gekennzeichnet, dass** *a priori* in jedem *Knotenrechner* und jeder *Verteilereinheit* ein *aktiver lokaler Allokationsplan* vorhanden ist, und vorzugsweise in jedem *Knotenrechner* und jeder *Verteilereinheit* mindestens ein *passiver lokaler Allokationsplan* gespeichert werden kann oder ist.

4. Echtzeitcomputersystem nach einem der Ansprüche 1 bis 3, **dadurch gekennzeichnet, dass** ein neuer passiver *Allokationsplan* während des Betriebes errechnet und in einen Knotenrechner oder eine Verteilereinheit geladen wird.

5. Echtzeitcomputersystem nach einem der Ansprüche 1 bis 4, **dadurch gekennzeichnet, dass** die Monitorkomponente vor Ende jedes *Ground-State-Zyklus* eine Nachricht mit dem Ground State einer EZSWK von der EZSWK erhält, und wobei beispielsweise die Monitorkomponente (135) nach dem Ausfall einer EZSWK den zuletzt erhaltenen Ground-State dieser EZSWK an die wieder anlaufende EZSWK sendet.

6. Echtzeitcomputersystem nach einem der Ansprüche 1 bis 5, **dadurch gekennzeichnet, dass** die Monitorkomponente nach einem permanenten Ausfall eines Knotenrechners einen *passiven globalen Allokationsplan* auswählt und nach der Allokation von sicherheitskritischen Echtzeitsoftwarekomponenten auf neue TTVMs die ausgefallenen nicht sicherheitsrelevanten Echtzeitsoftwarekomponenten - NSEZSWK - nach dem *best-effort Prinzip* auf TTVMs, die auf den verbleibenden funktionierenden Knotenrechnern eingerichtet werden können, allokiert.

7. Echtzeitcomputersystem nach einem der Ansprüche 1 bis 6, **dadurch gekennzeichnet, dass** im Falle, dass eine Fehlerhypothese die fail-silent Eigenschaft eines Knotenrechners vorgibt, aktive Redundanz durch die gleichzeitige Aktivierung von zwei unabhängigen TTVM mit der gleichen EZSWK realisiert wird, wobei die Empfänger der Nachrichten fortfahren, sobald eine der zeitgesteuerten Nachrichten von diesen beiden TTVM eingetroffen ist.

8. Echtzeitcomputersystem nach einem der Ansprüche 1 bis 6, **dadurch gekennzeichnet, dass** im Falle, dass die Fehlerhypothese die fail-silent Eigenschaft eines Knotenrechners nicht vorgibt, aktive Redundanz durch die gleichzeitige Aktivierung von drei unabhängigen TTVM mit der gleichen EZSWK realisiert wird, wobei die Empfänger der Nachrichten fortfahren, sobald zwei der drei empfangenen zeitgesteuerten Nachrichten bitgleiche Resultate beinhalten.

9. Echtzeitcomputersystem nach einem der Ansprüche 1 bis 6, **dadurch gekennzeichnet, dass** im Falle dass die Fehlerhypothese die fail-silent Eigenschaft eines Knotenrechners nicht vorgibt, die fail-silent Eigenschaft durch die gleichzeitige Aktivierung von zwei unabhängigen TTVM mit der gleichen sicherheitsrelevanten EZSWK realisiert wird, wobei die Empfänger der Nachrichten warten, bis beide zeitgesteuerten Nachrichten hätten eintreffen sollen und das Ergebnis verwerfen, falls die Resultate in beiden eingetroffenen zeitgesteuerten Nachrichten nicht *bit-gleich* sind.

10. Echtzeitcomputersystem nach einem der Ansprüche 1 bis 9, **dadurch gekennzeichnet, dass** intelligente Sensoren, die an zwei Verteilereinheiten angeschlossen sind, jeweils zwei Kopien einer zeitgesteuerten Nachricht gleichzeitig über zwei unabhängige Kommunikationskanäle (200) zu den Verteilereinheiten zur weiteren Verteilung senden, und wobei der endgültige Empfänger dieser Nachricht, sobald er eine syntaktisch korrekte Kopie empfangen hat, die andere Kopie verwirft.

11. Echtzeitcomputersystem nach einem der Ansprüche 1 bis 10, **dadurch gekennzeichnet, dass** in einem Testbetrieb neue erweiterte EZSWK parallel zu den bestehenden EZSWK auf Schatten TTVM installiert und mit den laufenden Eingabedaten des Prozesses versorgt werden, wobei die Ausgabedaten der neuen EZSWK nicht in den bestehenden Prozess geschaltet werden.

12. Echtzeitcomputersystem nach einem der Ansprüche 1 bis 11, **dadurch gekennzeichnet, dass** zumindest ein *Reserve Knotenrechner* zur Übernahme der Funktionen eines ausgefallenen Knotenrechners vorhanden ist.

13. Echtzeitcomputersystem nach einem der Ansprüche 1 bis 12, **dadurch gekennzeichnet, dass** die Knotenrechner und Verteilereinheiten auf zwei getrennte, insbesondere *räumlich getrennte Baueinheiten* aufgeteilt sind.

14. Echtzeitcomputersystem nach einem der Ansprüche 1 bis 13, **dadurch gekennzeichnet, dass** ein Knotenrechner, der eine drahtlose Verbindung zu externen Rechnern realisiert, eine Security Firewall enthält.

## Claims

1. A fault-tolerant distributed real-time computer system for controlling a physical system, in particular a machine or a motor vehicle, which comprises following components:
- node processors (241, 242, 243, 244),
- distribution units (232, 234),
- intelligent sensors (111, 112, 113) as well as
- intelligent actuators (121, 122, 123),
wherein these components have access to a global time of a known precision, and wherein the node processors and intelligent sensors and the intelligent actuators exchange periodic time-triggered messages and event-controlled messages via the distribution units, wherein functions, in particular all functions of the application software, are contained in real-time software components - RTSWC - and the periodic time-triggered data transfer between the RTSWCs is predefined,
and wherein, in active local allocation plans for each RTSWC,
- the allocation of the RTSWC to a time-triggered virtual machine - TTVM - of a node processor
- the following parameters of the TTVM
∘ start time and end time of a service interval -SI-
∘ storage areas for calculations of the RTSWC
∘ executable code of the RTSWC
∘ the schedules for a time-triggered communication of this RTSWC
are predefined, and wherein, in active local allocation plans for each distribution unit, the schedules for the time-triggered communication are contained in this distribution unit, and wherein a global allocation plan consists of the sum of the coordinated local allocation plans of all RTSWCs and all distribution units of the application software,
and wherein a monitor component periodically receives a copy of messages of the node processors in order to determine a current operational state of the node processors,
**characterized in that**
after the permanent failure of one or more RTSWCs, the monitor component activates a passive global allocation plan, which specifies the allocation of the RTSWCs and their data supply on newly installed TTVMs on the node processors that are still operational,
and wherein the RTSWCs are implemented at a specified periodic restart time according to the selected passive global allocation plan on the newly configured TTVMs,
and wherein a restart time of an RTSWC lies in a periodically recurring ground-state interval, wherein the ground-state interval is an interval between the end of an SI and the start of a following frame, and wherein a priori a periodic global restart time lies in a global ground-state interval, during which ground-state interval all RTSWCs and all distribution units remain in their ground state.

2. The real-time computer system according to claim 1,
**characterized in that** the SI parameter of an SI interval in an allocation plan depends on the power of the node processor on which a TTVM for an RTSWC is installed, and where this SI parameter is predefined a priori.

3. The real-time computer system according to claim 1 or 2, **characterized in that,** a priori in every node processor and every distribution unit, an active local allocation plan is available, and, preferably in every node processor and every distribution unit, at least one passive local allocation plan is or can be stored.

4. The real-time computer system according to one of claims 1 to 3, **characterized in that** a new passive allocation plan is calculated during operation and is loaded into a node processor or a distribution unit.

5. The real-time computer system according to one of claims 1 to 4, **characterized in that** the monitor component receives, before the end of each ground-state cycle, a message with the ground state of an RTSWC from the RTSWC, and wherein, for example, the monitor component (135), after the failure of an RTSWC, sends the last ground state received for this RTSWC to the restarting RTSWC.

6. The real-time computer system according to one of claims 1 to 5, **characterized in that,** after a permanent failure of a node processor, the monitor component selects a passive global allocation plan and allocates, after the allocation of the safety-critical real-time software components to new TTVMs, the failed non-safetey-critical real-time software components NSRTSWC- in accordance with the best effort principle to TTVMs that can be set up on the remaining operational node processors.

7. The real-time computer system according to one of claims 1 to 6, **characterized in that**, in cases where a fault hypothesis specifies the fail-silent characteristic of a node processor, active redundancy is realized by the simultaneous activation of two independent TTVMs with the same RTSWC, wherein the recipients of the messages proceed as soon as one of the time-triggered messages arrives from these two TTVMs.

8. The real-time computer system according to one of claims 1 to 6, **characterized in that**, in cases where the fault hypothesis does not specify the fail-silent characteristic of a node processor, active redundancy is realized by the simultaneous activation of three independent TTVMs with the same RTSWC, wherein the recipients of the messages proceed as soon as two of the three time-triggered messages received contain bit-identical results.

9. The real-time computer system according to one of claims 1 to 6, **characterized in that**, in cases where the fault hypothesis does not specify the fail-silent characteristic of a node processor, the fail-silent characteristic is realized by the simultaneous activation of two independent TTVMs with the same safety-critical RTSWC, wherein the recipients of the messages wait until both of the time-triggered messages should have arrived and reject the result in the event the results in both time-triggered messages that have arrived are not bit-identical.

10. The real-time computer system according to one of claims 1 to 9, **characterized in that** intelligent sensors that are connected to two distribution units respectively send two copies of a time-triggered message simultaneously via two independent communication channels (200) to the distribution units for further distribution, and wherein the final recipient of this message, as soon as it receives a syntactically correct copy, discards the other copy.

11. The real-time computer system according to one of claims 1 to 10, **characterized in that**, during a test operation, new enhanced RTSWCs are installed parallel to the existing RTSWCs on shadow TTVMs and are provided with continuous input data of the process, wherein the output data of the new RTSWCs are not entered into the existing process.

12. The real-time computer system according to one of claims 1 to 11, **characterized in that** at least one reserve node processor is available to take over the functions of the failed node processor.

13. The real-time computer system according to one of claims 1 to 12, **characterized in that** the node processor and distribution units are divided between two separate, in particular spatially separate, physical units.

14. The real-time computer system according to one of claims 1 to 13, **characterized in that** a node processor that realizes a wireless connection to external processors receives a safety firewall.

## Revendications

1. Système d'ordinateur exploité en temps réel réparti tolérant aux pannes d'une installation physique, notamment d'une machine ou d'un véhicule automobile, qui comprend les composants suivants :
- un ordinateur de jonction (241, 242, 243, 244),
- des unités de répartition (232, 234),
- des capteurs intelligents (111, 112, 113), ainsi que des
- actionneurs intelligents (121, 122, 123),
sachant que ces composants ont accès à un temps global de précision connue et, sachant que les ordinateurs de jonction, les capteurs intelligents et les actionneurs intelligents échangent des messages temporisés périodiques et des messages pilotés par événement par le biais des unités de répartition, sachant que des fonctions, notamment toutes les fonctions du logiciel d'utilisateur sont contenues dans des composants de logiciel en temps réel (CLTR) et le transfert de données temporisé périodique entre les CLTR est prédéfini, et
sachant que dans les plans d'allocation locaux actifs pour chaque CLTR
- l'attribution du CLTR à une machine virtuelle à déclenchement temporisé (MVDT) d'un ordinateur de jonction
- les paramètres suivants de la MVDT
∘ moment de début et moment de fin d'un intervalle de service (IS),
∘ zones de mémoire pour les calculs du CLTR,
∘ code exécutable du CLTR
∘ les programmes pour une communication temporisée de ce CLTR
Sont prédéfinis et sachant que dans les plans d'allocations locaux actifs pour chaque unité de répartition, les programmes pour la communication temporisée sont contenus dans cette unité de répartition et sachant qu'il existe un plan d'allocation global à partir de la somme des plans d'allocation locaux harmonisés l'un par rapport à l'autre de tous les CLTR et de toutes les unités de répartition du logiciel d'utilisateur,
et sachant qu'un composant d'écran de contrôle reçoit périodiquement une copie des messages des ordinateurs de jonction pour constater un état de fonctionnement actuel des ordinateurs de jonction,
**caractérisé en ce qu**'
après la défaillance permanente d'un ou de plusieurs CLTR, le composant de l'écran de contrôle active un plan d'allocation local passif, qui prédéfinit l'allocation du CLTR et l'alimentation en données de ceux-ci sur les MVDT nouvellement installées sur les ordinateurs de jonction continuant à fonctionner,
et sachant que les CLTR parviennent à exécution à un moment de redémarrage périodique prévu correspondant au plan d'allocation global passif sélectionné sur les MVDT nouvellement configurées et sachant qu'un moment de redémarrage d'un CLTR se situe dans un intervalle d'état de base revenant périodiquement, sachant que l'intervalle d'état de base est intervalle entre la fin d'un IS et le début d'un cadre suivant et sachant qu'à priori un moment de redémarrage global périodique dans un intervalle d'état de base global, intervalle de temps de base pendant lequel tous les CLTR et toutes les unités de répartition se maintiennent dans leur état de base.

2. Système d'ordinateur exploité en temps réel selon la revendication 1, **caractérisé en ce que** le paramètre IS d'un intervalle IS dans un plan d'allocation dépend de la productivité de chaque ordinateur de jonction, sur lequel une machine virtuelle à déclenchement temporisé (MVDT) pour un composant de logiciel en temps réel (CLTR) est installée et où ce paramètre IS est à priori prédéfini.

3. Système d'ordinateur exploité en temps réel selon la revendication 1 ou 2, **caractérisé en ce qu**'un plan d'allocation local actif est à priori présent dans chaque ordinateur de jonction et chaque unité de répartition et au moins un plan d'allocation local passif peut être ou est mémorisé de préférence dans chaque ordinateur de jonction et chaque unité de répartition.

4. Système d'ordinateur exploité en temps réel selon l'une quelconque des revendications 1 à 3, **caractérisé en ce qu**'un nouveau plan d'allocation passif et calculé pendant le fonctionnement et est chargé dans un ordinateur de jonction ou unité de répartition.

5. Système d'ordinateur exploité en temps réel selon l'une quelconque des revendications 1 à 4, **caractérisé en ce que** le composant d'écran de contrôle reçoit du CLTR avant la fin de chaque cycle d'état de base, un message avec l'état de base d'un CLTR et sachant par exemple que le composant d'écran de contrôle (135) envoie, après la défaillance d'un CLTR, l'état de base dernièrement reçu de ce CLTR au CLTR redémarrant.

6. Système d'ordinateur exploité en temps réel selon l'une quelconque des revendications 1 à 5, **caractérisé en ce que** le composant d'écran de contrôle sélectionne un plan d'allocation global passif après une défaillance permanente d'un ordinateur de jonction et alloue après l'allocation de composants de logiciel en temps réel critiques pour la sécurité aux nouvelles MVDT les composants de logiciel en temps réel (CLTR) défaillants non importants du point de vue sécurité, selon le principe du meilleur effort, aux MVDT, qui peuvent être agencées sur les ordinateurs de jonction fonctionnant restants.

7. Système d'ordinateur exploité en temps réel selon l'une quelconque des revendications 1 à 6, **caractérisé en ce que** dans le cas où une hypothèse de panne prédéfinit la propriété de sécurité positive d'un ordinateur de jonction, une redondance active est réalisée avec le même CLTR grâce à l'activation simultanée de deux MVDT indépendantes, sachant que les récepteurs des messages continuent, dès qu'un des messages temporisés est reçu par ces deux MVDT.

8. Système d'ordinateur exploité en temps réel selon l'une quelconque des revendications 1 à 6, **caractérisé en ce que** dans le cas où l'hypothèse de panne ne prédéfinit pas la propriété de sécurité positive d'un ordinateur de jonction, une redondance active est réalisée avec le même CLTR grâce à l'activation simultanée de trois MVDT indépendantes, sachant que les récepteurs des messages continuent, dès que deux des trois messages temporisés reçus contiennent des résultats égaux à un bit.

9. Système d'ordinateur exploité en temps réel selon l'une quelconque des revendications 1 à 6, **caractérisé en ce que** dans le cas où l'hypothèse de panne ne prédéfinit pas la propriété de sécurité positive d'un ordinateur de jonction, la propriété des sécurité positive est réalisée avec le même CLTR important du point de vue sécurité, grâce à l'activation simultanée de deux MVDT indépendantes, sachant que les récepteurs des messages attendent jusqu'à ce que les deux messages temporisés soient arrivés et rejettent le résultat, au cas où les résultats ne sont pas égaux à un bit dans les deux messages temporisés arrivés.

10. Système d'ordinateur exploité en temps réel selon l'une quelconque des revendications 1 à 9, **caractérisé en ce que** les capteurs intelligents, qui sont connectés aux deux unités de répartition, envoient respectivement deux copies d'un message temporisé simultanément par le biais de deux canaux de communication indépendants (200) aux unités de répartition pour poursuivre la répartition et sachant que le récepteur définitif de ce message rejette l'autre copie dès qu'il a reçu une copie correcte du point de vue syntaxique.

11. Système d'ordinateur exploité en temps réel selon l'une quelconque des revendications 1 à 10, **caractérisé en ce que** dans un fonctionnement d'essai de nouveaux CLTR élargis sont installés parallèlement aux CLTR existants à l'ombre de la MVDT et sont alimentés avec les données d'entrée courantes du processus, sachant que les données de sortie du nouveau CLTR ne sont pas connectées dans le processus existant.

12. Système d'ordinateur exploité en temps réel selon l'une quelconque des revendications 1 à 11, **caractérisé en ce qu**'au moins un ordinateur de jonction de réserve est présent pour prendre en charge les fonctions d'un ordinateur de jonction en panne.

13. Système d'ordinateur exploité en temps réel selon l'une quelconque des revendications 1 à 12, **caractérisé en ce que** l'ordinateur de jonction et les unités de répartition sont répartis sur deux unités modulaires séparées, notamment séparées dans l'espace.

14. Système d'ordinateur exploité en temps réel selon l'une quelconque des revendications 1 à 13, **caractérisé en ce qu**'un ordinateur de jonction, qui réalise une liaison sans fil avec des ordinateurs externes, contient un pare-feu de sécurité
